(19)

Europäisches
Patentamt

European
Patent Office

Office européen
des brevets

(11)  **EP 2 929 157 B1**

(12)  **EUROPEAN PATENT SPECIFICATION**

(45) Date of publication and mention
of the grant of the patent:
**31.01.2018  Bulletin 2018/05**

(21) Application number: **13791975.9**

(22) Date of filing: **12.11.2013**

(51) Int Cl.:
*F01N 11/00* *(2006.01)*     *F01N 3/022* *(2006.01)*

(86) International application number:
**PCT/EP2013/073556**

(87) International publication number:
**WO 2014/090497 (19.06.2014 Gazette 2014/25)**

(54) **ON BOARD DIAGNOSIS OF THE CONDITION OF AN EXHAUST PARTICLE FILTER**

BORDDIAGNOSE DES ZUSTANDS EINES ABGASPARTIKELFILTERS

DIAGNOSTIC EMBARQUÉ SE RAPPORTANT À LA CONDITION D'UN FILTRE À PARTICULES DE
GAZ D'ÉCHAPPEMENT

(84) Designated Contracting States:
**AL AT BE BG CH CY CZ DE DK EE ES FI FR GR
HR HU IE IS IT LI LT LU LV MC MK MT NL NO PL
PT RO RS SE SI SK SM TR**

(30) Priority: **10.12.2012  GB 201222177**

(43) Date of publication of application:
**14.10.2015  Bulletin 2015/42**

(73) Proprietor: **Jaguar Land Rover Limited
Coventry, Warwickshire CV3 4LF (GB)**

(72) Inventor: **VARNEY, Brian
Coventry
Warwickshire CV3 4LF (GB)**

(74) Representative: **Swindell & Pearson Limited
48 Friar Gate
Derby DE1 1GY (GB)**

(56) References cited:
**EP-A1- 2 037 090      EP-A2- 2 392 792
US-A1- 2009 084 097**

**Description**

TECHNICAL FIELD

This invention relates to a method of diagnosis, in particular a method of determining whether the behaviour or condition of apparatus is indicative of normal or faulty operation. The invention is applicable to an on-board diagnostic (OBD) of a vehicle, in particular an OBD for detecting a condition of a particle filter in the exhaust system thereof, to a system incorporating the diagnostic, and to a vehicle incorporating the system. Aspects of the invention relate to a method, to an electronic control unit and to a vehicle.

BACKGROUND

Legislation concerning vehicle exhaust emissions prescribes certain standards. In order to reduce particulate emissions of diesel engined vehicles it is common to provide a diesel particle filter (DPF) in the exhaust tailpipe. It may also soon become common to fit a gasoline particle filter (GPF) in the tailpipe of gasoline engined vehicles.

In a particle filter, soot particles are trapped in a filter matrix, so that the filter becomes progressively blocked. Periodically, at a predetermined threshold, a DPF is regenerated by combusting the soot therein, and after regeneration the DPF may be considered to be 'clean', and to have a minimal soot loading.

Soot loading of a DPF may be calculated in the engine management system by summing the operational record of the engine over time, based upon for example empirical observations of a test engine in good condition. This record may permit regeneration at a theoretical threshold, but the actual soot loading of the DPF is always an unknown, because for example the overall condition of the engine is generally unknown and thus an engine may be producing more soot than is expected. Theoretical soot loading is also typically based on a worst case combustion scenario, so that the amount of soot is not underestimated - as a consequence the theoretical soot loading is usually greater than the actual soot loading, even for an engine in good condition, so that the DPF is in a known state only when clean, (i.e. at the conclusion of a regeneration event).

Legislation further prescribes that an OBD be provided to confirm that exhaust emission controls are functioning correctly. One such OBD requirement relates to gross failure of the DPF, and is intended to indicate whether the DPF is wholly or partially missing from the exhaust system. Typically this OBD will detect a failure, and illuminate a malfunction illumination lamp (MIL) on the vehicle dashboard, so as to alert the vehicle driver that investigation and/or repair is necessary.

As soot loading increases within the DPF, the differential pressure across the filter matrix also increases, and thus differential pressure can be measured in order to give an indication of the amount of soot in the DPF.

However differential pressure measurement cannot in many circumstances distinguish between a fully loaded DPF having a partially missing matrix, and a partially loaded DPF. This is because the high back pressure of the blocked portion of the DPF is countered by the low back pressure of the missing portion, and the resultant average pressure differential across the DPF may be equivalent to that of a partially blocked undamaged DPF.

A known OBD can detect a failed DPF if the differential pressure is below a pre-determined threshold minimum corresponding to minimum differential pressure of a clean DPF. However as the DPF becomes more loaded, differential pressure increases above that of a normal clean DPF, and diagnosis of a failed DPF becomes difficult if not impossible. Reference to the theoretical soot-loading of the DPF tends not to be helpful, because of the over-estimation referred to above.

If the OBD is not effective, untreated exhaust emissions may pass to the exhaust tailpipe outlet. One solution would be to regenerate the DPF frequently in order to establish a known reference. An example of a known diagnostic apparatus for a filter resulting in DPF regeneration is described in EP2392792. The diagnostic apparatus in EP2392792 includes: a differential pressure sensor that detects a differential pressure across the filter; an execution portion that executes a forced recovery process that oxidizes and thereby removes particulate matter accumulated in the filter by forcibly increasing a temperature of the filter; and a first diagnostic portion that determines that the filter is in a normal condition if there is a period where a value detected by the differential pressure sensor is on the increase, within a period where the forced recovery process is unexecuted.

However frequent regeneration of a partially loaded DPF is undesirable because combustion of soot particles within the DPF generally requires the temperature of exhaust gas to be relatively high, which may require the vehicle engine to operate temporarily with a substantially increased fuel:air ratio - such operation has a fuel cost penalty, so that it would be desirable to optimize regeneration so far as possible by increasing the interval between regeneration events.

A characteristic of all known OBDs is that a single test is applied to measured and calculated data in order to determine both 'fault' and 'normal' conditions of the tested component. In other words a single threshold is applied to indicate pass or fail. A difficulty can arise with OBDs designed to detect DPF failure by consideration of differential pressure because if the effect of soot loading is included in the OBD design (i.e. the magnitude of the estimated soot loading changes say the magnitude of a threshold differential pressure) then when the inaccurate soot loading estimate reads high, the OBD can deliver false "fault" indications because the actual differential pressure appears low relative to the permitted threshold. If however the soot loading effect is ignored in the OBD design, the OBD can deliver a false "normal" indication for a faulty DPF that contains any significant quantity of soot.

What is required is an OBD better able to indicate gross failure of a particle filter whereby untreated exhaust emissions may be exhausted from the vehicle engine in contravention of a legislative limit.

EP2392792 A2 describes a diagnostic apparatus for a filter which includes a differential pressure sensor that detects a differential pressure across the filter; an execution portion that executes a forced recovery process that oxidizes and thereby removes particulate matter accumulated in the filter by forcibly increasing a temperature of the filter; and a first diagnostic portion that determines that the filter is in a normal condition if there is a period where a value detected by the differential pressure sensor is on the increase, within a period where the forced recovery process is unexecuted.

SUMMARY OF THE INVENTION

According to an aspect, the invention provides a method of determining normal or faulty operation of a particle filter of a vehicle exhaust system by periodic diagnostic check as recited in the appended claim 1.

The method is applied to determining loss of filter matrix in the particle filter by reference to real time pressure drop across the filter and gas flow through the filter, and comprises running a first diagnostic check to determine a first reference value indicative of whether operation is faulty or not by reference to a first predetermined threshold, said first reference value being determined by reference to minimum pressure drop across a normal filter and minimum pressure drop across a filter at a matrix loss threshold, running a second diagnostic check to determine a second reference value indicative of whether operation is normal or not by reference to a second predetermined threshold, said second reference value being determined by reference to minimum pressure drop across a filter at a matrix loss threshold and maximum pressure drop across said filter at a matrix loss threshold, and in the event of a failure to determine either faulty operation or normal operation, requesting a regeneration of the particle filter and running the first and the second diagnostic checks after regeneration of the particle filter.

The period before requesting a regeneration of the particle filter may be settable or adjustable according to the nature and rate of change of condition of the component.

An embodiment of the invention provides two diagnostic checks, which may be run simultaneously or consecutively. These two diagnostic checks may run continually or intermittently at an interval appropriate to the circumstances of use. Each diagnostic check is independent, and may be optimized for detecting normal operation or faulty operation. Most importantly each diagnostic check relies upon a threshold for simplicity, but classifies results as definite toward one end of a range, or not determinable. This is in distinction to the prior art OBD which necessarily requires a definite decision for both ends of a range for all results. The consequence of the prior art OBD is that the range of 'fault' and or the range of 'normal' may be very wide - in particular including many marginal results which must be classified as one or other definite result, rather than as 'not determined'.

The advantage of the invention is that results which are not clearly 'fault' and 'normal' do not have to be included in one or other category. By repeating the method of the invention, continually or intermittently, sufficient 'fault' and 'normal' indications can be obtained. Repetition in a vehicle OBD may for example be at an interval of 100mS, 500mS or any other suitable interval. The invention allows a substantial increase in the accuracy and availability of an OBD test for normality. When applied to an OBD for determining condition of a DPF, the invention allows the use of the soot loading estimated value without fear of generating false indications when the calculation of soot loading is overestimating content. As a result appropriate 'normal', 'fault' and "not determinable" results can be delivered at all times; whereas the known OBD could deliver an appropriate 'normal' or 'fault' result only in the period immediately following a regeneration event, when the DPF is clean.

The method may in one embodiment run the first and second diagnostic checks repeatedly and independently in order to identify faulty or normal operation with certainty. However in one embodiment appropriate averaging/filtering is applied to the test, results, thus requiring only a single high accuracy assessment to determine one of 'fault', 'normal' and 'not determined'. A register may be run continuously to maximize the opportunity of delivering a definite 'normal' or 'fault' result during any given drive cycle. A drive cycle may be determined by the period between 'ignition' and 'ignition off' events.

Both 'fault' and 'normal' determination can be made more accurately than in the prior art methods, thus avoiding precautionary illumination of a MIL whilst giving greater certainty to a determination of 'normal' and 'fault'. Furthermore, the OBD can be used to give a positive indication of 'normal' rather than a result that could be characterized as 'not determinable'.

The method of an embodiment of the invention provides that the regeneration of the particle filter is requested in the event of a failure to determine 'fault' or 'normal' typically after a prolonged period. Such a strategy preferably changes significantly a parameter, so as to shift the range of results to a substantially different region, and thereby break a cycle of repeating non-determination.

The method of an embodiment of the invention has particular application in determining loss of filter matrix in a particle filter of a vehicle exhaust system by reference to real time pressure drop across said filter and gas flow through the filter. 'Gas flow' in this specification reflects both the volumetric flow rate and dynamic head of the exhaust gas passing through the particle filter at any given time.

Faulty operation is determined by reference to the minimum pressure drop anticipated across a normal particle filter and the minimum pressure drop anticipated across a particle filter at a matrix loss threshold. The respective pressure drops are the anticipated values calculated from a combination of terms relating to dynamic head loss and filter loss.

Normal operation may be determined by reference to the anticipated minimum pressure drop across a filter at a matrix loss threshold, and the anticipated maximum pressure drop which could be achieved at a given calculated soot loading across said filter at a matrix loss threshold, the respective pressure drops being calculated in the same manner from a combination of dynamic head loss and filter loss terms.

The matrix loss threshold is typically determined according to a legislative requirement, for example a loss of matrix of cross-sectional area of 25% may be found to correspond to a maximum tailpipe soot emissions threshold of say 25mg/km. Such a threshold may be settable or variable in the method of the invention in accordance with any requirement.

The minimum pressure drop typically corresponds to substantially zero soot content of the particle filter, it being understood that this condition pertains immediately after a regeneration when the particle filter is clean. Increasing soot content progressively blocks gas flow, and accordingly the pressure drop shows a corresponding increase. Maximum pressure drop corresponds to a maximum soot content within the particle filter which might be achieved at a given calculated soot loading when operated at a given gas flow, (and may be the design soot capacity limit, or a soot limit appropriate to a regeneration condition, such as ensuring that the maximum temperature of the DPF during regeneration does not exceed a pre-determined value).

In one embodiment, the method comprises determining for an exemplar normal filter a minimum pressure drop across the filter for a range of gas flows through the filter; determining for an exemplar filter at said matrix loss threshold a minimum pressure drop across the filter for a range of gas flows through the filter; measuring continually a real time pressure drop across an in-use filter; and calculating continually the corresponding gas flow through the in-use filter; calculating continually the first reference value relating the difference between the measured pressure drop and the minimum pressure drop of a filter at said matrix loss threshold, with the difference between the minimum pressure drop of a normal filter and the minimum pressure drop of a filter at said matrix loss threshold; comparing said first reference value to the first predetermined threshold, and declaring said in use filter faulty if said reference value is less than said first predetermined threshold.

In one embodiment, the method comprises determining for an exemplar filter at said matrix loss threshold a minimum pressure drop across the filter for a range of gas flows through the filter; determining for an exemplar filter at said matrix loss threshold a maximum pressure drop across the filter for a given calculated soot loading and range of gas flows through the filter; measuring continually a real time pressure drop across an in-use filter, and calculating continually the corresponding gas flow through the in-use filter and soot loading of the in-use filter; calculating continually the second reference value relating the difference between the measured pressure drop and minimum pressure drop for a filter at the matrix loss threshold, with the difference between the minimum and maximum pressures for a filter at the matrix loss threshold; comparing said second reference value to the second predetermined threshold, and declaring said in use filter normal if said reference value is greater than said second predetermined threshold.

The regeneration of the particle filter is requested after a predetermined time period, or after a predetermined mileage of a vehicle such as 100 miles (161 kilometres) or 500 miles (805 kilometres). In each case the period may be re-set according to another event, such as an ignition on/off cycle.

The regeneration of the particle filter substantially changes the soot content, so as to significantly change the operating parameters used in the OBD.

Aspects of the invention apply to an electronic control unit configured to implement the method of the invention, and to a motor vehicle having a diesel particle filter in the exhaust system thereof, and having such a control unit. It will be understood that the relevant threshold will be determined according to faulty operation and normal operation, with an appropriate tolerance.

In some but not necessarily all examples of the present disclosure there is provided a method of determining the condition of a particle filter of a vehicle exhaust system by periodic diagnostic check as recited in claim 1. The method comprising determining loss of filter matrix in the particle filter by reference to real time pressure drop across the filter and gas flow through the filter, said diagnostic check indicating behaviour corresponding to 'normal' and 'fault' by reference to one or more predetermined thresholds, the method comprising running a first diagnostic check optimized for fault behaviour by reference to a threshold, said fault behaviour being determined by reference to minimum pressure drop across a normal filter and minimum pressure drop across a filter at a matrix loss threshold, said first diagnostic check indicating 'fault' or 'not determined', running a second diagnostic check optimized for normal behaviour by reference to a threshold, said normal behaviour being determined by reference to minimum pressure drop across a filter at a matrix loss threshold and maximum pressure drop across said filter at a matrix loss threshold, said second diagnostic check indicating 'normal' or 'not determined', and implementing an alternative strategy in the event of both a failure to determine 'fault' and a failure to determine 'normal'.

Within the scope of this application it is expressly intended that the various aspects, embodiments, examples and alternatives set out in the preceding paragraphs, in the claims and/or in the following description and drawings, and in particular the individual features thereof, may be taken independently or in any combination that is consistent with the claims. Features described in connection with one embodiment are applicable to all embodiments, unless such features are incompatible.

BRIEF DECRIPTION OF DRAWINGS

One or more embodiments of the invention will now be described, by way of example only, with reference to the accompanying drawings, in which:

Fig. 1 is a schematic longitudinal section through a typical diesel particle filter in which flow passages are enlarged to improve clarity;

Fig. 2 is a typical relationship of volume flow and pressure differential in a DPF; and

Fig. 3 is a schematic cross-section of a DPF, showing a portion of missing matrix;

DETAILED DESCRIPTION

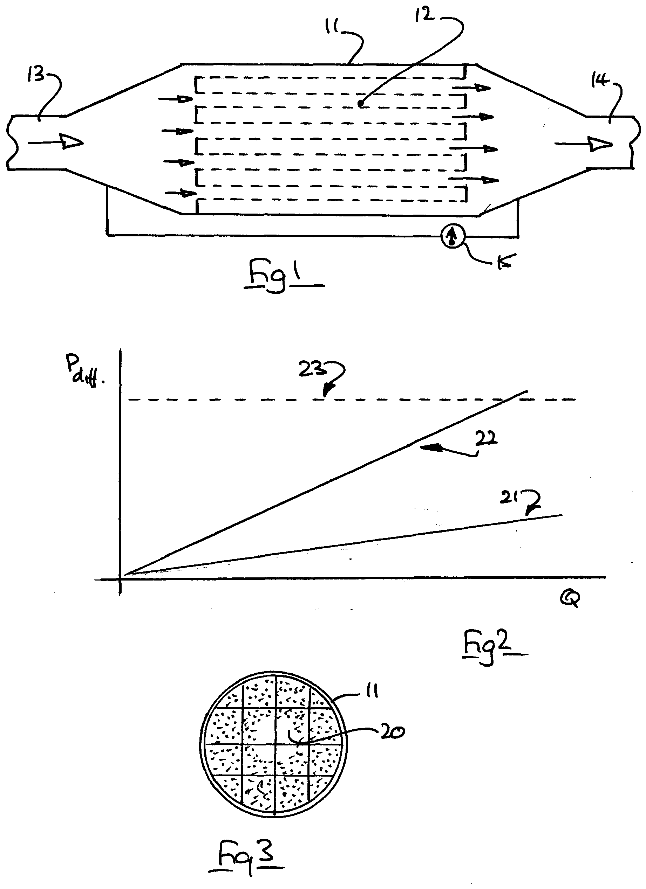

With reference to the drawings Fig. 1 represents a typical diesel particle filter (DPF) comprising a casing 11 for a filter monolith 12 consisting of a plurality of closely packed blind passages separated by a filter medium. Exhaust gas from an inlet pipe 13 must pass through the filter medium in order to reach an outlet pipe 14. The flow direction of exhaust gas is represented by arrows.

The passages illustrated in Fig. 1 are much enlarged in order to clearly indicate the construction thereof. In practice these passages are very small and numerous, and generally provided in a monolith having a circular cross-section (see also Fig. 3).

In use the filter medium retains carbon particles and progressively becomes blocked. Conventionally, differential pressure is measured across the monolith in order to give an indication of soot loading, as indicated schematically by pressure gauge 15.

Gas flow through the exhaust system can be determined according to data in the usual electronic engine management unit (EMU), and differential pressure may be represented as an electronic signal from one or more pressure sensors.

Flow rate Q may be plotted against differential pressure Pdiff, as indicated in Fig. 2. The pressure differential is a measure of soot loading since back pressure increases progressively as the filter monolith becomes blocked. However differential pressure cannot always reliably indicate whether the DPF matrix is intact.

Fig. 2 represents a conventional characteristic 21 for a clean (empty) DPF, and the characteristic 22 of a loaded DPF. At a threshold, indicated by dotted line 23, regeneration of the DPF may be triggered. In order to accommodate drivers who fail to trigger regeneration of the DPF, because they do not drive at a sufficient value of Q, the characteristic of Fig. 2 may include one or more additional trigger lines at a steeper gradient than line 21. Regeneration is generally accomplished by increasing temperature within the DPF so that soot is consumed by combustion thereof. At the end of a regeneration event, the DPF may be considered to be 'clean'.

Legislation prescribes that loss of filtration capacity, for example because of break-up of the filter matrix, be detected by a diagnostic. Fig. 3 illustrates a typical cross-sectional view of the rear face of a DPF matrix in which a central portion 20, about 20% of the total, thereof is missing. Exhaust gas may pass through the missing portion 20 unhindered, and thus unfiltered.

A conventional DPF diagnostic for determining loss of filter matrix typically works in the following manner.

The pressure drop across a normal clean DPF is determined for a range of volumetric flow rates for example by empirical laboratory measurement and this data is used to generate a characteristic relationship between the pressure drop and volumetric flow for a normal clean DPF. Additional characteristic relationships are then established for a range of discrete soot loading intervals.

These characteristics are then used within a vehicle engine management system to generate a theoretical threshold differential pressure PDiffNorm appropriate for any given vehicle volumetric flow rate and soot loading. The actual differential pressure recorded by vehicle at a given volumetric flow rate and soot loading is then compared to this threshold differential pressure, and the difference between the two values is calculated (PDiffDelta).

This value is then compared to a tolerance value (PDiffDeltaLimit) to determine if the matrix meets a damage threshold corresponding to a legislative limit. Thus if PDiffDelta > PDiffDeltaLimit a fault may be declared - in other words the differential pressure is less than the differential pressure PDiffNorm which a fully functional DPF would impose at the instant volume flow by a magnitude of PDiffDeltaLimit. In other cases the DPF is considered normal - this normality is assumed for all cases in which a fault is not declared.

The diagnostic may be repeated as often as necessary, typically at a rate of 10Hz.

Unfortunately the level of caution applied to the predicted DPF soot loading, tends to give a band of results which does not allow a failed DPF to be reliably distinguished from a serviceable DPF. Ideally the diagnostic would not give precautionary false results, since this would illuminate a MIL and cause expense for the vehicle owner.

The invention provides a new technique whereby separate diagnostic checks are run to establish 'fault' and 'normal'. This has two advantages. Firstly, in each case, the alternative result is 'not determined', so that the respective thresholds are not a compromise between 'fault' and 'normal' only. Thus not only are the 'fault' and 'normal' results determined according to individual algorithms, the technique of the invention does not require an uncertain result to be classed as definitely 'fault' or definitely 'normal'.

Secondly the technique can make accurate judgements even when required to make use of information which may be suspected or known to be inaccurate.

Thus as demonstrated by the case of the DPF monitor; even though the soot loading calculated by an Engine Management System may be greatly in excess of the actual soot loading, the monitor will not falsely identify a DPF as faulty.

In the case of a diagnostic for loss of filter matrix in a DPF, laboratory testing of a clean normal DPF gives a characteristic (Pmin) relating differential pressure to volume flow. A similar characteristic (Pmin fault) can be determined for a clean DPF at the legislative fault limit - i.e. with the maximum allowable loss of filter matrix. A further characteristic can also be determined for the same faulty DPF when operated across a range of soot loading values up to the maximum safe operating limit (Pmax fault) - a value which is defined by a function related to the calculated soot loading. In the latter case the DPF is substantially blocked by soot save for the portion where the filter matrix is missing.

The following algorithm is used in the invention to determine a dimensionless reference value $R_f$ indicative of a loss of filter matrix sufficient to be classed as faulty in relation to a real time measurement of differential pressure across an in-use DPF:

$$R_f = \frac{Pdiff - Pmin\ fault}{Pmin - Pmin\ fault}$$

A DPF is considered faulty if $R_f$ is less than a fault threshold, but otherwise the DPF is considered to be in an undetermined condition.

A different algorithm is used to determine a dimensionless reference value Rn indicative of a DPF which may definitely be classed as normal:

$$Rn = \frac{Pdiff - Pmin\ fault}{Pmax\ fault - Pmin\ fault}$$

A DPF is considered normal if Rn is greater than a normal threshold, and otherwise the DPF is considered to be in an undetermined condition.

The invention thus permits both fault and normal to be positively indicated, and accommodates a range of indeterminate results for which a positive decision cannot be made.

The diagnostic technique is repeated continually, and in the case of repeated non-determination of 'fault' or 'normal', an alternative strategy is implemented which typically aims to substantially change the test conditions, in this example the condition of the DPF itself.

The alternative strategy is to command a regeneration of the DPF in the event that the diagnostic checks have failed to indicate 'fault' or 'normal' within a predetermined period, which may be expressed as a time, or in a vehicle by a predetermined mileage. In one example the period is 500 miles (805 kilometres).

Accordingly, in these circumstances, a regeneration is performed as soon as permissible, according to a standard regeneration control strategy of the vehicle. Upon completion of regeneration, the DPF can be considered 'clean' and thus fault determination is not obscured by the existence of an unknown quantity of soot within the DPF. This latter point is important since a clean normal DPF may exhibit differential pressure which is less than a DPF which is partially blocked by soot at the legislative limit of loss of filter matrix.

Although described in relation to a diagnostic for a DPF, the invention is applicable to any other circumstance where a range of test values is classified as pass/fail. A suitable algorithm is devised to better approximate each of pass/not determined and fail/not determined, so that results classified on pass and fail are more accurate. In order to deal with the range of 'not determined' results the invention proposes an alternative strategy to materially change test conditions, so that one of pass and fail may be conclusively determined.

The applicable algorithm depends entirely on the circumstances, but it is considered that suitable algorithms can be determined by the skilled man without difficulty in the knowledge that an existing pass/fail threshold is modified to include an intermediate range of 'not determined'. Likewise the change necessary to alter test conditions will also depend upon circumstances, and will be selected by the skilled man with reference to ease of implementation and cost.

## Claims

1. A method of determining normal or faulty operation of a particle filter of a vehicle exhaust system by periodic diagnostic check, wherein said method is applied to determining loss of filter matrix in the particle filter by reference to real time pressure drop across the filter and gas flow through the filter, the method comprising:

running a first diagnostic check to determine a first reference value ($R_f$) indicative of whether operation is faulty or not faulty by reference to a first predetermined threshold, said first reference value being determined by reference to minimum pressure drop across a normal filter (Pmin) and minimum pressure drop across a filter at a matrix loss threshold (Pmin fault), running a second diagnostic check to determine a second reference value (Rn) indicative of whether operation is normal or not normal by reference to a second predetermined threshold, said second reference value being determined by reference to minimum pressure drop across a filter at a matrix loss threshold (Pmin fault) and maximum pressure drop across said filter at a matrix loss threshold (Pmax fault), and in the event of a failure to determine either faulty operation or normal operation, requesting a regeneration of the particle filter and running the first and the second diagnostic checks after regeneration of the particle filter.

2. A method according to claim 1, wherein said first and second diagnostic checks run simultaneously.

3. A method according to claim 1, wherein said first and second diagnostic checks run consecutively.

4. A method according to any preceding claim, wherein said first and second diagnostic checks run continually.

5. A method according to claim 4, wherein said first and second diagnostic checks run at an interval of 100 milliseconds or more.

6. A method according to any of claims 1-3, wherein said first and second checks run intermittently.

7. A method according to any preceding claim, wherein the regeneration of the particle filter is requested after said first and second diagnostic checks have repeatedly failed to determine either faulty operation or normal operation.

8. A method according to claim 7, wherein the regeneration of the particle filter is requested after a predetermined period or after the vehicle has travelled a predetermined distance, exceeding 100 miles (161 kilometres).

9. A method according to any preceding claim, wherein minimum pressure drop corresponds to substantially zero soot content in the filter.

10. A method according to claim 9, wherein maximum pressure drop corresponds to soot content in the filter at a soot capacity limit thereof.

11. A method according to any preceding claim, and comprising:

    determining for an exemplar normal filter a minimum pressure drop (Pmin) across the filter for a range of gas flows through the filter; determining for an exemplar filter at said matrix loss threshold a minimum pressure drop (Pmin fault) across the filter for a range of gas flows through the filter; measuring continually a real time pressure drop (Pdiff) across an in-use filter; and calculating continually the corresponding gas flow through the in-use filter; calculating continually the first reference value ($R_f$) relating the difference between the measured pressure drop and the minimum pressure drop of a filter at said matrix loss threshold, with the difference between the minimum pressure drop of a normal filter and the minimum pressure drop of a filter at said matrix loss threshold; comparing said first reference value to the first predetermined threshold, and declaring said in use filter faulty if said reference value is less than said first predetermined threshold.

12. A method according to any preceding claim, and comprising:

    determining for an exemplar filter at said matrix loss threshold a minimum pressure drop (Pmin fault) across the filter for a range of gas flows through the filter; determining for an exemplar filter at said matrix loss threshold a maximum pressure drop (Pmax fault) across the filter for a range of gas flows through the filter for a series of soot loading intervals; measuring continually a real time pressure drop (Pdiff) across an in-use filter, and calculating continually the corresponding gas flow through the in-use filter, and the soot loading of the in-use filter; calculating continually the second reference value (Rn) relating the difference between the measured pressure drop and minimum pressure drop at the matrix loss threshold, with the difference between the minimum pressure and the maximum pressure at the matrix loss threshold; comparing said second reference value to the second predetermined threshold, and declaring said in use filter normal if said reference value is greater than said second predetermined threshold.

13. An electronic control unit of a motor vehicle, said control unit being configured to apply a diagnostic check to a particle filter of the vehicle exhaust system according to the method of any preceding claim.

14. A motor vehicle having an internal combustion engine, a particle filter in the exhaust system thereof and an electronic control unit according to claim 13.

**Patentansprüche**

1. Verfahren zum Bestimmen eines normalen oder fehlerhaften Betriebs eines Partikelfilters einer Fahrzeugabgasanlage durch periodische Diagnoseprüfung, wobei das Verfahren angewendet wird, um einen Verlust einer Filtermatrix im Partikelfilter durch Bezugnahme auf Echtzeitdruckabfall über den Filter hinweg und Gasstrom durch den Filter zu bestimmen, wobei das Verfahren Folgendes umfasst:

   Durchführen einer ersten Diagnoseprüfung zum Bestimmen eines ersten Referenzwerts ($R_f$), der angibt, ob ein Betrieb fehlerhaft oder nicht fehlerhaft ist, durch Bezugnahme auf einen ersten vorgegebenen Grenzwert, wobei der erste Referenzwert durch Bezugnahme auf einen minimalen Druckabfall über einen normalen Filter hinweg (Pmin) und einen minimalen Druckabfall über einen Filter auf einem Matrixverlustgrenzwert hinweg (Pmin Fehler) bestimmt wird,
   Durchführen einer zweiten Diagnoseprüfung zum Bestimmen eines zweiten Referenzwerts (Rn), der angibt, ob ein Betrieb normal oder nicht normal ist, durch Bezugnahme auf einen zweiten vorgegebenen Grenzwert, wobei der zweite Referenzwert durch Bezugnahme auf einen minimalen Druckabfall über einen Filter auf einem Matrixverlustgrenzwert hinweg (Pmin Fehler) und einen maximalen Druckabfall über den Filter auf einem Matrixverlustgrenzwert hinweg (Pmax Fehler) bestimmt wird, und
   im Fall eines Scheiterns des Bestimmens eines fehlerhaften Betriebs oder eines normalen Betriebs, Anfordern einer Regeneration des Partikelfilters und Durchführen der ersten und der zweiten Diagnoseprüfung nach der Regeneration des Partikelfilters.

2. Verfahren nach Anspruch 1, wobei die erste und die zweite Diagnoseprüfung gleichzeitig durchgeführt werden.

3. Verfahren nach Anspruch 1, wobei die erste und die zweite Diagnoseprüfung nacheinander durchgeführt werden.

4. Verfahren nach einem der vorhergehenden Ansprüche, wobei die erste und die zweite Diagnoseprüfung fortlaufend durchgeführt werden.

5. Verfahren nach Anspruch 4, wobei die erste und die zweite Diagnoseprüfung mit einem Intervall von mindestens 100 Millisekunden durchgeführt werden.

6. Verfahren nach einem der Ansprüche 1-3, wobei die erste und die zweite Prüfung zeitweise durchgeführt werden.

7. Verfahren nach einem der vorhergehenden Ansprüche, wobei die Regeneration des Partikelfilters angefordert wird, nachdem die erste und die zweite Diagnoseprüfung wiederholt versagten, entweder einen fehlerhaften Betrieb oder einen normalen Betrieb zu bestimmen.

8. Verfahren nach Anspruch 7, wobei die Regeneration des Partikelfilters angefordert wird: nach einem vorgegebenen Zeitraum oder nachdem das Fahrzeug eine vorgegebene Distanz, die 100 Meilen (161 Kilometer) überschreitet, zurückgelegt hat.

9. Verfahren nach einem der vorhergehenden Ansprüche, wobei ein minimaler Druckabfall im Wesentlichen null Rußgehalt im Filter entspricht.

10. Verfahren nach Anspruch 9, wobei ein maximaler Druckabfall einem Rußgehalt im Filter mit einer Rußkapazitätsgrenze davon entspricht.

11. Verfahren nach einem der vorhergehenden Ansprüche und Folgendes umfassend:

    Bestimmen, für einen beispielhaften normalen Filter, eines minimalen Druckabfalls (Pmin) über den Filter hinweg für einen Bereich von Gasströmen durch den Filter;
    Bestimmen, für einen beispielhaften Filter auf dem Matrixverlustgrenzwert, eines minimalen Druckabfalls (Pmin Fehler) über den Filter hinweg für einen Bereich von Gasströmen durch den Filter;
    fortlaufendes Messen eines Echtzeitdruckabfalls (Pdiff) über einen eingesetzten Filter hinweg; und fortlaufendes Berechnen des entsprechenden Gasstroms durch den eingesetzten Filter;
    fortlaufendes Berechnen des ersten Referenzwerts ($R_f$) in Bezug auf die Differenz zwischen dem gemessenen Druckabfall und dem minimalen Druckabfall eines Filters auf dem Matrixverlustgrenzwert, mit der Differenz zwischen dem minimalen Druckabfall eines normalen Filters und dem minimalen Druckabfall eines Filters auf dem Matrixverlustgrenzwert;
    Vergleichen des ersten Referenzwerts mit dem ersten vorgegebenen Grenzwert und Melden des eingesetzten Filters als fehlerhaft, wenn der Referenzwert unter dem ersten vorgegebenen Grenzwert liegt.

12. Verfahren nach einem der vorhergehenden Ansprüche und Folgendes umfassend:

    Bestimmen, für einen beispielhaften Filter auf dem Matrixverlustgrenzwert, eines minimalen Druckabfalls (Pmin Fehler) über den Filter hinweg für einen Bereich von Gasströmen durch den Filter;

Bestimmen, für einen beispielhaften Filter auf dem Matrixverlustgrenzwert, eines maximalen Druckabfalls (Pmax Fehler) über den Filter hinweg für einen Bereich von Gasströmen durch den Filter für eine Reihe von Rußbeladungsintervallen;

fortlaufendes Messen eines Echtzeitdruckabfalls (Pdiff) über einen eingesetzten Filter hinweg und fortlaufendes Berechnen des entsprechenden Gasstroms durch den eingesetzten Filter und der Rußbeladung des eingesetzten Filters;

fortlaufendes Berechnen des zweiten Referenzwerts (Rn) in Bezug auf die Differenz zwischen dem gemessenen Druckabfall und dem minimalen Druckabfall auf dem Matrixverlustgrenzwert, mit der Differenz zwischen dem minimalen Druckabfall und dem maximalen Druck auf dem Matrixverlustgrenzwert;

Vergleichen des zweiten Referenzwerts mit dem zweiten vorgegebenen Grenzwert und Melden des eingesetzten Filters als normal, wenn der Referenzwert über dem zweiten vorgegebenen Grenzwert liegt.

**13.** Elektronische Steuereinheit eines Kraftfahrzeugs, wobei die Steuereinheit konfiguriert ist, eine Diagnoseprüfung an einem Partikelfilter der Fahrzeugabgasanlage nach dem Verfahren nach einem der vorhergehenden Ansprüche anzuwenden.

**14.** Kraftfahrzeug mit einem Verbrennungsmotor, einem Partikelfilter in der Abgasanlage davon und einer elektronischen Steuereinheit nach Anspruch 13.

## Revendications

**1.** Procédé de détermination d'un fonctionnement normal ou défaillant d'un filtre à particules d'un système d'échappement de véhicule par une vérification de diagnostic périodique, ledit procédé étant appliqué pour déterminer une perte de matrice du filtre dans le filtre à particules en se référant à la chute de pression en temps réel sur le filtre et le flux gazeux à travers le filtre, le procédé comprenant les étapes suivantes :

exécuter une première vérification de diagnostic pour déterminer une première valeur de référence ($R_f$) indiquant si un fonctionnement est défaillant ou non en se référant à un premier seuil prédéterminé, ladite première valeur de référence étant déterminée en se référant à une chute de pression minimum sur un filtre normal (Pmin) et à une chute de pression minimum sur un filtre à un seuil de perte de matrice (défaut Pmin),

exécuter une deuxième vérification de diagnostic pour déterminer une deuxième valeur de référence (Rn) indiquant si un fonctionnement est normal ou non en se référant à un deuxième seuil prédéterminé, ladite deuxième valeur de référence étant déterminée en se référant à une chute de pression minimum sur un filtre à un seuil de perte de matrice (défaut Pmin) et à une chute de pression maximum sur ledit filtre à un seuil de perte de matrice (défaut Pmax), et

en cas d'échec de la détermination d'un fonctionnement défaillant ou d'un fonctionnement normal, demander une régénération du filtre à particules et exécuter des première et deuxième vérifications de diagnostic après la régénération du filtre à particules.

**2.** Procédé selon la revendication 1, dans lequel lesdites première et deuxième vérifications de diagnostic sont exécutées simultanément.

**3.** Procédé selon la revendication 1, dans lequel lesdites première et deuxième vérifications de diagnostic sont exécutées consécutivement.

**4.** Procédé selon l'une quelconque des revendications précédentes, dans lequel lesdites première et deuxième vérifications de diagnostic sont exécutées en permanence.

**5.** Procédé selon la revendication 4, dans lequel lesdites première et deuxième vérifications de diagnostic sont exécutées à un intervalle supérieur ou égal à 100 millisecondes.

**6.** Procédé selon l'une quelconque des revendications 1 à 3, dans lequel lesdites première et deuxième vérifications sont exécutées par intermittence.

**7.** Procédé selon l'une quelconque des revendications précédentes, dans lequel la régénération du filtre à particules est demandée après que lesdites première et deuxième vérifications de diagnostic ont échoué de manière répétée à déterminer un fonctionnement défaillant ou un fonctionnement normal.

**8.** Procédé selon la revendication 7, dans lequel la régénération du filtre à particules est demandée après une période prédéterminée ou après que le véhicule a parcouru une distance prédéterminée, dépassant 100 miles (161 kilomètres).

**9.** Procédé selon l'une quelconque des revendications précédentes, dans lequel une chute de pression minimum correspond à une teneur en suie sensiblement nulle dans le filtre.

**10.** Procédé selon la revendication 9, dans lequel une chute de pression maximum correspond à une teneur en suie dans le filtre à une limite de capacité en suie de celui-ci.

**11.** Procédé selon l'une quelconque des revendications précédentes, et comprenant les étapes suivantes :

déterminer, pour un exemple de filtre normal, une chute de pression minimum (Pmin) sur le filtre pour une plage de flux gazeux à travers le filtre ;

déterminer, pour un exemple de filtre audit seuil de perte de matrice, une chute de pression minimum (défaut Pmin) sur le filtre pour une plage de flux gazeux à travers le filtre ;

mesurer en continu une chute de pression en temps réel (Pdiff) sur un filtre en cours d'utilisation ; et calculer en continu le flux gazeux correspondant à travers le filtre en cours d'utilisation ;

calculer en continu la première valeur de référence ($R_f$) relative à la différence entre la chute de pression mesurée et la chute de pression minimum d'un filtre audit seuil de perte de matrice, avec la différence entre la chute de pression minimum d'un filtre normal et la chute de pression minimum d'un filtre audit seuil de perte de matrice ;

comparer ladite première valeur de référence au premier seuil prédéterminé, et déclarer ledit filtre en cours d'utilisation comme étant défaillant si ladite valeur de référence est inférieure audit premier seuil prédéterminé.

**12.** Procédé selon l'une quelconque des revendications précédentes, et comprenant les étapes suivantes :

déterminer, pour un exemple de filtre audit seuil de perte de matrice, une chute de pression minimum (défaut Pmin) sur le filtre pour une plage de flux gazeux à travers le filtre ;

déterminer, pour un exemple de filtre audit seuil de perte de matrice, une chute de pression maximum (défaut Pmax) sur le filtre pour une plage de flux gazeux à travers le filtre pour une série d'intervalles de charge de suie ;

mesurer en continu une chute de pression en temps réel (Pdiff) sur un filtre en cours d'utilisation, et calculer en continu le flux gazeux correspondant à travers le filtre en cours d'utilisation, et la charge de suie du filtre en cours d'utilisation ;

calculer en continu la deuxième valeur de référence (Rn) relative à la différence entre la chute de pression mesurée et la chute de pression minimum au seuil de perte de matrice, avec la différence entre la pression minimum et la pression maximum au seuil de perte de matrice ;

comparer ladite deuxième valeur de référence au deuxième seuil prédéterminé, et déclarer ledit filtre en cours d'utilisation comme étant normal si ladite valeur de référence est supérieure audit deuxième seuil prédéterminé.

**13.** Unité de commande électronique d'un véhicule à moteur, ladite unité de commande étant configurée pour appliquer une vérification de diagnostic à un filtre à particules du système d'échappement de véhicule conformément au procédé selon l'une quelconque des revendications précédentes.

**14.** Véhicule à moteur présentant un moteur à combustion interne, un filtre à particules dans le système d'échappement de celui-ci et une unité de commande électronique selon la revendication 13.

Fig 1

Fig 2

Fig 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2392792 A

- EP 2392792 A2